# EUROPÄISCHE PATENTSCHRIFT

(11) **EP 2 900 455 B1**
(45) Veröffentlichungstag und Bekanntmachung des Hinweises auf die Patenterteilung: **03.04.2019**
(21) Anmeldenummer: 13766578.2
(22) Anmeldetag: 27.09.2013
(51) Int. Cl.: B29C 67/00, B22F 3/105

(54) **VORRICHTUNG ZUR STABILISIERUNG EINES PULVERBETTS MITTELS UNTERDRUCK FÜR DIE ADDITIVE FERTIGUNG UND ENTSPRECHENDES VERFAHREN**
APPARATUS AND METHOD FOR STABILIZING A POWDER BED BY MEANS OF VACUUM FOR ADDITIVE MANUFACTURINGAND CORRESPONDING PROCESS
DISPOSITIF PERMETTANT DE STABILISER UN LIT DE POUDRE AU MOYEN D'UNE PRESSION NÉGATIVE, DANS LE CADRE DE LA FABRICATION ADDITIVE ET PROCÉDÉ CORRESPONDANT

(30) Priorität: 28.09.2012 DE 102012109262
(43) Veröffentlichungstag der Anmeldung: 05.08.2015
(73) Patentinhaber: Bundesrepublik Deutschland, vertreten durch das Bundesministerium für Wirtschaft und Technologie, dieses vertreten durch den Präsidenten der BAM,, 12205 Berlin (DE)
(72) Erfinder: GÜNSTER, Jens, 14169 Berlin (DE); ZOCCA, Andrea, 12167 Berlin (DE); MORAIS GOMES, Cynthia, 12163 Berlin (DE); MÜHLER, Thomas, 38678 Clausthal-Zellerfeld (DE)
(74) Vertreter: Zimmermann & Partner Patentanwälte mbB
(86) Internationale Anmeldenummer: PCT/EP2013/070289
(87) Internationale Veröffentlichungsnummer: WO 2014/049159

(56) Entgegenhaltungen:
- DE-A1- 19 952 998
- US-A- 5 017 753
- US-A1- 2002 079 601

## Beschreibung

Die Erfindung liegt auf dem Gebiet additiver Fertigungsverfahren und der Prototypenfertigung bzw. des Rapid Prototyping.

Verfahren zur additiven Fertigung unterscheiden sich von subtraktiven Verfahren wie Fräsen, Bohren und Erodieren dadurch, dass Material zu einem Bauteil zusammengeführt wird. Hierzu muss sich das Material in einem Zustand befinden, in dem es selbst keine Form definiert, jedoch in eine Form gebracht werden kann. Ausgangsstoffe wie knetbare Massen, Pasten, Pulver, Flüssigkeit etc. erfüllen diesen Zweck. Während intuitiv verständlich ist, dass knetbare Massen und Pasten zu einer Struktur formbar sind, ist das bei Pulvern und Flüssigkeiten nicht unmittelbar der Fall. Üblicherweise wird bei Pulvern ein Verbinden der Partikel mittels eines Hilfsstoffes, z.B. einem Binder erreicht. Flüssigkeiten, wie z.B. fließfähige Partikelsuspensionen, können durch Trocknen oder einen Phasenübergang von flüssig nach fest fixiert zum Aufbau einer Struktur verwendet werden. Eine Klasse der frühen Verfahren zur additiven Fertigung bilden die pulverbasierten Verfahren, bei denen Pulverpartikeln in Schichten, typischerweise 50 bis 200 µm dick, gestapelt werden und in jeder dieser Schichten mittels lokalem Aufbringen eines Binders oder mittels lokalem Schmelzen durch einen Laserstrahl miteinander verbunden werden. Die binderbasierten Pulververfahren wurden am Massachusetts Institute of Technology in Cambridge, USA und die laserbasierten an der University of Texas in Austin, USA Ende der 80er, Anfang der 90er Jahre des letzten Jahrhunderts entwickelt und sind als 3D-Druck bzw. Selektives Laser Sintern bekannt. Beide Verfahren haben heute ihren festen Platz zwischen den mittlerweile zahlreichen additiven Fertigungsverfahren gefunden und gehören bezüglich Anzahl der gefertigten Bauteile sicherlich zu den gegenwärtig führenden Verfahren. Neben einer kontinuierlichen Optimierung der diesen beiden Verfahren zugrundeliegenden Technologien, hat in den 30 Jahren seit ihrer Erfindung keine wesentliche Weiterentwicklung beim 3D Druck bzw. Selektiven Laser Sintern stattgefunden.

In US 2002/079601 A1 ist ein Verfahren und eine Vorrichtung zur Anfertigung von Prototypen eines drei-dimensionalen Objekts beschrieben. In DE 199 52 998 A1 ist eine Vorrichtung und die Verwendung von Vakuum und/oder einer zusätzlichen Wärmequelle zur direkten Herstellung von Körpern im Schichtaufbau aus pulverförmigen Stoffen beschrieben. Die Druckschrift US 5 017 753 A beschreibt ein Verfahren und eine Vorrichtung zur Bauteilherstellung mittels selektivem Sintern.

Bei additiven Fertigungsverfahren, die auf dem schichtweisen Aufbau des Ausgangsmaterials als Pulver beruhen, ist die Stabilisierung der im Pulverbett eingeschlossenen Strukturen (Bauteile) problematisch. Ein wesentliches Problem der pulverbasierten Verfahren besteht wie bisher in der Tatsache, dass das Pulverbett, also all das Pulvermaterial, welches durch den Schichtaufbau gestapelt aber nicht zu einem Bauteil verbunden wurde, im Aufbauprozess die eingeschlossene Struktur (das Bauteil) nicht ausreichend stützt. Beim Auftragen einer neuen Pulverschicht kann die bereits verfestigte Struktur im Pulverbett verschoben werden, was zu Defekten in der Struktur bis hin zum vollständigen Verlust der Struktur führt. Aus diesem Grunde werden bei pulverbasierten additiven Fertigungstechnologien neben dem zu fertigenden Bauteil mit der jeweiligen Fertigungstechnologie zusätzlich sogenannte Supportstrukturen aufgebaut. Diese Supportstrukturen verankern das aufzubauende Bauteil mit der Arbeitsplattform und fixieren es somit im Koordinatensystem des Bauraums der Anlage.

Darüber hinaus sind Supportstrukturen notwendig, wenn besonders komplexe Geometrien realisiert werden sollen. Das Entfernen der Supportstrukturen erfordert nach dem eigentlichen additiven Fertigungsprozess einen zusätzlichen Prozessschritt, der zeitaufwendig und kaum zu automatisieren ist und daher einer autonomen Fertigung, wie sie durch die additive Fertigung realisiert werden kann, entgegensteht. Somit stellt sich die Aufgabe, das Pulverbett soweit zu stabilisieren, dass auf Supportstrukturen gänzlich verzichtet werden kann, der Fertigungsprozess selbst allerdings nicht beeinflusst wird und was noch entscheidender ist, die Entnahme des Bauteils aus dem Pulverbett nicht verhindert wird. Ein Pulverbett mit aneinander verklebten Partikeln würde z.B. einer einfachen Entnahme des Bauteils aus dem Pulverbett entgegenstehen. Insbesondere würde das Entfernen des nicht zum Bauteil gehörigen Pulvers an schwer zugänglichen Stellen des Bauteils problematisch sein. Der letzte Punkt ist besonders auch beim Entfernen von Supportstrukturen sehr problematisch und führt zu klaren Einschränkungen beim Design von Bauteilen für die pulverbasierte additive Fertigung.

Nach dem Aufbauprozess muss die Supportstruktur von dem eigentlichen Bauteil abgetrennt werden. Dieser Prozess ist zeitaufwendig und kaum automatisierbar.

Mit Hilfe der nachfolgend beschriebenen Technologie lassen sich diese Probleme weitestgehend umgehen. Durch die Verwendung einer Vakuumpumpe und einer porösen Plattform, auf der die Pulverschichten zum Bauprozess gestapelt werden, wird ein Unterdruck an das Pulverbett angelegt. Das Anlegen eines Unterdrucks führt dazu, dass sich ein Druckgefälle im Pulverbett aufbaut und Luft oder entsprechend speziell zugeführte Prozessgase durch das grundsätzlich poröse Pulverbett gesaugt werden. Der hierdurch entstehende Gasstrom lässt auf jedes einzelne Pulverpartikel eine zusätzlich Kraft wirken, die in Richtung des Gasstroms, also in Richtung der Bauplattform wirkt. Hierdurch werden die einzelnen Partikel fixiert und das Pulverbett wird stabilisiert. Da das System, umfassend die Bauplattform und das Pulverbett porös ist, baut sich der Druckgradient schnell ab, sobald der Unterdruck nicht weiter aufrechterhalten wird, das heißt z.B. die Vakuumpumpe gestoppt wird. Hierdurch lässt sich der Gasstrom schalten und eine Beeinflussung des Druckprozesses beim Aufbringen des Binders oder des Erhitzungsprozesses beim selektiven Sinterprozess wird vermieden. Der Gasstrom wird dann in dem Moment eingeschaltet, in dem eine Stabilisierung des Pulverbettes am notwendigsten ist, nämlich beim Auftragen einer weiteren Pulverschicht. Die hierbei auftretenden Kräfte stellen das größte Risiko dar, dass das Bauteil im Aufbauprozess im Pulverbett verschoben und somit in seiner Kontur verzerrt werden kann.

Es ist überraschend, wie gleichmäßig sich der Luftstrom im Pulverbett verteilt. Aus diesem Grunde ist eine Störung des Luftstroms im Pulverbett durch die Generierung von dichten Bauteilen, wie es z.B. durch das Selektive Laser Schmelzen von metallischen Pulvern möglich ist, nicht unbedingt problematisch im Hinblick auf die erfindungsgemäß erzielte stabilisierende Wirkung des Gasstroms. Der Luftstrom fließt einfach um das Bauteil herum. Dies wird dadurch begünstigt, dass in den kleinen Kanälen zwischen den Pulverpartikeln im Wesentlichen eine laminare Strömung, also eine Strömung ohne Wirbelbildung im Gas, vorherrscht und sich eine laminare Strömung in den Kanälen, die das dichte Bauteil umgeben, gleichmäßig verteilen kann. Hierfür stellt das poröse Pulverbett in allen drei Raumrichtungen genügen offenen Porenraum (Porosität) zur Verfügung.

In Hinsicht darauf, wird eine Vorrichtung zur Stabilisierung eines Pulverbetts gemäß dem vorliegenden Anspruch 1, ein Verfahren zur schichtweisen Ausformung eines Bauteils aus einem Material, umfassend ein Pulver gemäß Anspruch 8, und eine Verwendung einer Vorrichtung gemäß Anspruch 12 vorgeschlagen.

Gemäß einer ersten Ausführungsform wird eine Vorrichtung zur Stabilisierung eines Pulverbetts durch Unterdruck für ein additives Fertigungsverfahren vorgeschlagen, umfassend: - einen zumindest einseitig offenen Behälter, umfassend einen Boden, zumindest eine Seitenwand und eine Behälteröffnung; - einen Filter im oder über dem Boden und/oder in der zumindest einen Seitenwand, wobei eine vom Filter eingenommene Fläche der Fläche des Bodens oder der Fläche der Seitenwand entspricht und wobei der Filter im Wesentlichen undurchlässig für ein das Pulverbett umfassendes Pulver ist; und - einen Anschluss am Boden und/oder an der Seitenwand des Behälters oder auf einer von einer Öffnung des Behälters abgewandten Seite des Filters, wobei der Anschluss angepasst ist, um an eine Saugpumpe angeschlossen werden zu können, sodass ein im Behälter angeordnetes Pulverbett durch einen von der Saugpumpe erzeugten Unterdruck gegen den Filter gedrückt und stabilisiert wird.

Vorteile dieser Ausführungsform ergeben sich aus der beim Evakuieren des Pulverbetts eintretenden Verfestigung der zunächst zumindest teilweise losen Pulverschüttung. Diese Verfestigung besteht in einer Verdichtung der Pulverschüttung unter Einfluss des äußeren Atmosphärendrucks. Diese Verdichtung bewirkt eine Stabilisierung der Position einzelner Pulverkörner und der durch den gewählten Fertigungsprozess lokal miteinander verklebten, verschmolzenen oder anderweitig miteinander verbundenen Bereiche (Domänen), die eine Vielzahl benachbarter Pulverkörner umfassen. So können feine, innerhalb des Pulverbetts erzeugte Strukturen zuverlässig gehalten und gegen mechanische Belastung stabilisiert werden. Eine mechanische Belastung der ggf. filigranen Strukturen im Pulverbett tritt beispielsweise auf, wenn ein typischerweise schichtweise aufgebautes Pulverbett um eine neue Schicht frischen, noch unbearbeiteten Pulvers aufgefüllt wird. Beim Auffüllen eines bereits in einem Behälter vorliegenden Pulverbettes, beispielsweise mit einer Rakel, können sowohl Druck- als auch Scherbelastungen auftreten. Derartige Scherbelastungen können zu Rissen in einer ggf. nur teilweise verfestigten Struktur führen oder ein vollständiges Abscheren verfestigter oder teilverfestigter Domänen bewirken. Ebenso kann die beim Auftrag mittels Rakel oder Hohlrakel resultierende Druckbelastung Störungen im Pulverbett und in einer darin eingebetteten Struktur verursachen. Ein weiterer Vorteil der vorgeschlagenen Vorrichtung besteht darin, dass sie lediglich einfache und somit einfach ersetzbare oder austauschbare Komponenten erfordert. Beispielsweise kann der beschriebene Filter aus einer geeignet dimensionierten Filzschicht oder einer geeignet dimensionierten Fritte bestehen. Ein weiterer Vorteil der wie beschrieben erreichten Verfestigung des Pulverbetts ergibt sich aus dem möglichen Verzicht auf eine parallel zur Zielstruktur (Nutzen) zu erzeugenden Stützstruktur. In Abhängigkeit von der räumlichen Komplexität der Zielstruktur kann die parallel erforderliche Erzeugung angepasster Stützstrukturen einen erheblichen Fertigungsaufwand erfordern. Auf diesen Mehraufwand kann nun verzichtet werden. Vor diesem Hintergrund reduziert sich der Materialaufwand je Objekt, da Pulver nun ausschließlich für die Erzeugung der unmittelbar genutzten Struktur (Nutzen) verwendet wird. Weiterhin reduziert sich der je Nutzen erforderliche Aufwand an Zeit und Kosten, zum einen durch den Wegfall der für die Erzeugung von Stützstrukturen bisher notwendigen Schritte, zum anderen durch erleichtertes Entformen und nun nicht mehr notwendige Entfernen von Stützstrukturen.

Gemäß einer weiteren Ausführungsform wird eine Vorrichtung vorgeschlagen, wobei der Boden oder der über dem Boden angeordnete Filter (3) bündig und rechtwinklig zur Seitenwand oder zum Filter in der Seitenwand angeordnet ist. Somit ist ein über dem Boden angeordnetes Pulverbett entlang einer Seite durch die zum Pulverbett weisende seitliche Oberfläche der Seitenwand begrenzt. Dabei kann die seitliche Oberfläche der Seitenwand - je nach Bauform - unmittelbar durch die Seitenwand selbst oder durch einen in die Seitenwand integrierten Filter gebildet sein.

Diese Ausführungsform bietet den Vorteil, dass ein im Winkel zwischen Boden und Seitenwand aufgebautes Pulverbett von vier Seiten frei zugänglich ist. Das ermöglicht beispielsweise die Kombination unterschiedlicher Technologien der Pulververfestigung miteinander.

Gemäß einer weiteren Ausführungsform wird eine Vorrichtung vorgeschlagen, wobei der Behälter zwei parallel zueinander angeordnete Seitenwände und einen Filter aufweist, der jeweils bündig zu den Seitenwänden und im Wesentlichen rechtwinklig zu einander gegenüberliegenden Flächen der Seitenwände ausgerichtet ist und der unter Beibehaltung seiner Ausrichtung zwischen den Seitenwänden frei bewegt werden kann.

Vorteile dieser Ausführungsform ergeben sich beispielsweise aus der einfachen und robusten Bauweise der beschriebenen Vorrichtung. Beispielsweise kann ein Pulverbett in einer beidseitig offenen Vertiefung zwischen zwei, einander gegenüberliegenden Wänden gleicher Höhe erzeugt werden, indem der Zwischenraum zwischen diesen Wänden jeweils bis zur Oberkante der beiden einander gegenüberliegenden Wände mit Pulver gefüllt wird. Nach einem ersten lokalen Verfestigen bzw. Strukturieren einer ersten Schicht des Pulverbetts wird das Pulverbett oben um eine Schicht aufgefüllt, indem die zwischen den beiden einander gegenüber liegenden Wänden befindliche Bodenplatte um einen Schritt abgesenkt wird. Durch die seitlich beidseitig offene Bauweise kann überflüssiges Pulver beidseitig austreten bzw. unter Bildung eines jeweils Material- und Konsistenztypischen Schüttwinkels abfließen. Vorteilhafterweise ist entweder die Bodenplatte oder zumindest eine Seitenwand als Filter ausgebildet. Das Pulverbett kann somit zumindest während des Absenkens der Bodenplatte und während des Auftrags der neuen Schicht durch einen während dieser Schritte oder durch einen permanent anliegenden Unterdruck der Saugpumpe stabilisiert werden.

Gemäß einer weiteren Ausführungsform wird eine Vorrichtung vorgeschlagen, wobei der Filter als Transportband ausgeführt ist, das quer zu den einander gegenüberliegenden Seitenwänden beweglich angeordnet ist.

Vorteile dieser Ausführungsform ergeben sich aus der Möglichkeit, ein in einem schichtweise aufgebauten Pulverbett allmählich schichtweise aufgebautes Objekt vollständig aus der Vorrichtung zu entfernen, ohne die jeweilige Ausrichtung der Rakel und/oder des jeweils zur Verfestigung losen Pulvers verwendeten Werkzeugs (z.B.: Laser, Düse, Strahlquelle, Druckkopf...) in Relation zur Position der beiden einander gegenüber liegenden Wände verändern zu müssen. Das kann einfach durch den Vorschub der Bodenplatte in Richtung einer der beiden offenen Seiten erfolgen, indem die Bodenplatte wie ein Transportband vorrückt. Das Vorrücken kann unter Aufrechterhaltung eines am Filter anliegenden Unterdrucks erfolgen, wenn der Filter bodenseitig angeordnet ist. Das Pulverbett mit der darin enthaltenen Struktur wird somit auch während des Vorschub-Schrittes gestützt. Ist zumindest eine der beiden rechtwinklig zum Boden angeordneten Seitenwände mit einem Filter ausgerüstet, so wird vor dem Vorrücken der Bodenplatte die Verbindung des seitlichen Filters zur Saugpumpe unterbrochen.

Gemäß einer weiteren Ausführungsform wird eine Vorrichtung vorgeschlagen, wobei der als Transportband ausgeführte Filter rechtwinklig zu einer Transportrichtung verstellbar ist. Vorzugsweise ist der Filter höhenverstellbar, wobei eine Höhe einem Abstand des als Transportband ausgeführten Filters zu einer oberen Kante zumindest einer der beiden Seitenwände entspricht.

Für den hier beschriebenen schichtweisen Aufbau des Pulverbetts bzw. der Zielstruktur bietet das den Vorteil, die Schichthöhe jeweils so anzupassen, dass optimale Bedingungen für die gewünschte Verfestigung des Pulvers der betreffenden Schicht vorliegen, indem die jeweils gewünschte Schichtdicke durch Absenken der Bodenplatte eingestellt wird. Beispielsweise kann die Schichtdicke des jeweils aufgetragenen Pulverbetts in Abhängigkeit von der Komplexität auszuarbeitender Strukturelemente variiert werden.

Die Kombination der Merkmale der vorstehend genannten Ausführungsformen bietet den Vorteil einer kontinuierlichen Fertigung: Ist eine erste Struktur erzeugt, wird das sie enthaltende Pulverbett aus dem Bearbeitungsbereich herausgeführt, anschließend wird die Bodenplatte für die Strukturierung der ersten Schicht des neuen Pulverbetts vorbereitet. Beispielsweise kann die als untere Begrenzung des Behälters dienende Filterplatte angehoben werden und das darauf befindliche Pulver mit einer Rakel geglättet werden, wobei der Unterdruck über die Saugpumpe aufgebaut ist oder wird. Daran schließt sich der nächste Zyklus des additiven Prozesses an.

Gemäß einer weiteren Ausführungsform wird eine Vorrichtung vorgeschlagen, wobei der als Transportband ausgeführte Filter schrittweise entlang einer Transportrichtung beweglich ist.

Die Vorteile dieser Ausführungsform decken sich mit jenen vorstehend beschriebenen. Insbesondere wird über die Bewegungsrichtung des Transportbands eine Maschinenrichtung definiert, die Vorteile einer Fertigungslinie eröffnet. Weiterhin ist die Länge einer erzeugten Formen bei dieser Anlagenform nahezu unbegrenzt, da es keine prinzipielle Beschränkung der Länge des Pulverbetts in Richtung des Transportbandes (Bandförderers) gibt.

Gemäß einer weiteren Ausführungsform wird eine Vorrichtung vorgeschlagen, wobei der Filter in dem Behälter relativ zu einer Behälteröffnung, insbesondere von der Behälteröffnung weg oder zur Behälteröffnung hin, bewegt werden kann.

Vorteile dieser Ausführungsform bestehen in der Möglichkeit eines präzisen Anfahrens der gewünschten Position der Bodenplatte zum Erzielen einer jeweils gewünschten Schichtdicke des Pulverbetts.

Gemäß einer weiteren Ausführungsform wird eine Vorrichtung vorgeschlagen, wobei die Behälteröffnung eine obere Öffnung des Behälters ist und der Filter in Schritten definierter Größe schrittweise abgesenkt werden kann.

Aus der definierten Schrittweite ergibt sich für eine optimierte Saugleistung der Pumpe eine definierte Schichtdicke der verfestigten oder der teilverfestigten Struktur.

Gemäß einer weiteren Ausführungsform wird eine Vorrichtung vorgeschlagen, wobei der Filter so abgesenkt werden kann, dass sich ein Abstand des Filters zu einer Ebene, die im Wesentlichen durch einen Öffnungsquerschnitt der Behälteröffnung definiert wird, über die gesamte vom Filter eingenommene Fläche gleichmäßig ändert.

Vorteile dieser Ausführungsform bestehen in einer hohen Reproduzierbarkeit der erhaltenen Schichtaufbauten und der direkten Entsprechung bzw. Übertragbarkeit der im CAD-Modell konzipierten und mit dem realen Objekt (Prototypen) erzielten Schichtstruktur.

Die vorstehenden Ausführungsformen beruhen auf der Möglichkeit, das Pulverbett unter dem Einfluss äußeren (atmosphärischen) Drucks gegen den Boden oder/und ein Seitenwand eines Behälters zu pressen und so zu stabilisieren. Das kann vorteilhafterweise unter Aufrechterhaltung eines Druckgradienten erzielt werden, der im Pulverbett abfällt. Um diesen Druckgradienten auszubilden, wird die beschriebene Vorrichtung durch eine angepasste Saugpumpe ergänzt. Die angepasste Saugpumpe realisiert einen ausreichend hohen Volumenstrom je Zeiteinheit und ist vorteilhafterweise angepasst, je nach erreichter Schichtdicke bzw. Hohe und Ausdehnung des Pulverbetts einen gleichbleibend starken Druckgradienten aufrecht zu erhalten. Dadurch kann ein nachträgliches Sacken bereits verfestigter Bereiche des Pulverbetts und damit die mögliche Gefahr einer Schädigung der eingebetteten Strukturen verhindert werden.

Gemäß einer weiteren Ausführungsform wird eine Vorrichtung vorgeschlagen, wobei eine Anordnung von Kanälen oder Ausnehmungen im Boden des Behälters bei vollständig auf den Boden des Behälters abgesenktem Filter ein über die gesamte vom Filter eingenommene Fläche gleichmäßiges Evakuieren des Pulverbetts durch den Filter gewährleistet.

Für Bauformen der Vorrichtung mit einer starr angeordneten Bodenplatte, die das Pulverbett auf einer beweglich und parallel über der Bodenplatte angeordneten Filterplatte tragen, ergeben sich Vorteile eines gleichmäßig und großflächig ausgebildeten Druckgradienten auch bei vollständig abgesenkter Filterplatte. Die bezeichneten Kanäle und/oder Ausnehmungen können sternförmig, Netzartig oder anderweitig regelmäßig angeordnet sein. Sie erlauben eine gleichmäßige Abführung des mit der Saugpumpe geförderten Fluids und verhindern so ein nachträgliches ruckartiges Schrumpfen des bereits verfestigten Pulverbetts.

Gemäß einer weiteren Ausführungsform wird eine Vorrichtung vorgeschlagen, wobei eine Trichterform des Filters und/oder des Bodens ein gleichmäßiges Evakuieren des Pulverbetts durch den Filter gewährleistet.

Vorteile dieser Ausführungsform bestehen in einer zusätzlichen Homogenisierung des im Pulverbett aufgebauten Druckgradienten.

Gemäß einer weiteren Ausführungsform wird eine Vorrichtung vorgeschlagen, wobei das Pulverbett ein zumindest teilweise schichtweise aufgebautes Bauteil oder einen Teil eines solchen Bauteils zumindest abschnittsweise umschließt und/oder während des Betriebs der an den Anschluss angeschlossenen Saugpumpe stabilisiert und stützt.

Die Vorteile dieser Ausführungsform decken sich weitestgehend mit den eingangs beschriebenen Vorteilen.

Gemäß einer weiteren Ausführungsform wird ein Verfahren zur schichtweisen Ausformung eines Bauteils aus einem Material, umfassend ein als Pulverbett bereitgestelltes Pulver vorgeschlagen, umfassend: - Auftragen zumindest einer Schicht des Materials auf einen Filter; - Formen einer Schicht eines schichtweise aufgebauten Bauteils in der zumindest einen Schicht des Materials; - Aufbauen eines Druckgradienten zwischen der zumindest einen Schicht des Materials und der vom Material abgewandten Seite des Filters durch Erzeugen eines Unterdrucks, wobei die unter der Wirkung des Druckgradienten verdichtete zumindest eine Schicht die geformte Schicht des schichtweise aufgebauten Bauteils stabilisiert und stützt; - optionales Wiederholen der Schritte Auftragen, Formen und Aufbauen des Druckgradienten bis zur vollständigen Ausformung des Bauteils in einem Pulverbett, das durch wiederholtes schichtweises Auftragen des Materials auf dem Filter ausgebildet wird; - Entformen des Bauteils. Die benannten Verfahrensschritte können in beliebiger Reihenfolge miteinander verknüpft oder unabhängig voneinander wiederholt oder miteinander kombiniert werden.

Mögliche Vorteile dieser Ausführungsform ergeben sich aus dem Verzicht auf zusätzliche und nach der Entnahme des verfestigten Bauteils funktionslose Stützelemente und -strukturen die zusätzlichen Material-, Zeit- und Kostenbedarf verursachen.

Gemäß einer weiteren Ausführungsform umfasst das vorgeschlagene Verfahren weiterhin ein Verstärken des aufgebauten Druckgradienten durch Zuführen eines Gases mit Hilfe eines damit erzeugten Überdrucks auf jener Seite der als Filter ausgeführten Arbeitsplattform, die dem Pulverbett zugewandt ist, bzw. in dem das Pulverbett enthaltenden Behälter.

Vorteile dieser Ausführungsform ergeben sich aus der Möglichkeit, eine Kraft, die ohnehin bereits von dem die Partikelpackung durchströmenden Gas auf die Pulverpartikel ausgeübt wird, in einem weiteren Bereich regulieren zu können. Insbesondere kann diese Kraft verstärkt werden, da der Filter (Arbeitsplattform) zwar gasdurchlässig ist, das Pulver jedoch nicht in den Filter eindringen oder durch den Filter hindurch gelangen kann.

Gemäß einer Modifikation dieser Ausführungsform ist das zugeführte Gas unter einem Inertgas und/oder einem Reaktivgas ausgewählt. Diese Auswahl richtet sich nach der Art des verwendeten Pulvers und/oder des gewählten Bindemittels.

Vorteile ergeben sich in Abhängigkeit von der Art des verwendeten Pulvers bzw. des der ortsaufgelöst innerhalb einer Schicht erzielten Verbindung von Pulverpartikeln untereinander. So kann die Gegenwärt eines Inertgases die unbeabsichtigte Verklumpung der Partikel allein unter dem Packungsdruck verhindern helfen. Ebenso kann die Anwesenheit eines Reaktivgases im Porenraum bei der beispielsweise laserinduzierten Erwärmung eine erleichterte ortsaufgelöste Verbindung der Laserexponierten Partikeln einer Schicht bewirken. Das ermöglicht entweder eine verbesserte Selektivität und damit größere Strukturfeinheit oder eine erleichterte Entnahme des fertigen Formkörpers aus dem Pulverbett.

Gemäß einer weiteren Ausführungsform wird vorgeschlagen, das auf der vom Material abgewandten Seite des Filters zugeführte Gas zu sammeln und optional zu komprimieren und - quasi im Kreislauf - auf der Seite der freien Oberfläche des Pulverbetts und/oder auf der dem Material zugewandten Seite des Filters dem Pulverbett erneut zuzuführen.

Vorteile ergeben sich aus der Einsparung des für einen vollständigen, mit der Entnahme des gefertigten Bauteils abschließenden Fertigungszyklus benötigten Gasmenge. Beispielsweise benötigt eine Anlage andauernd kontinuierliche Gaszufuhr, sondern kommt für eine bestimmte Anzahl von Fertigungszyklen, beispielsweise, mit einem Flüssiggasballon, umfassend das zur Zufuhr vorgesehene Prozessgas aus.

Gemäß einer weiteren Ausführungsform wird vorgeschlagen, dass eine Atmosphäre auf der dem Material zugewandten Seite einen Druck größer als 0 Pa aufweist.

Vorteile ergeben sich aus der insgesamt höheren Kraft, mit der die Partikel der erzielten Packung zueinander gepresst und dabei temporär lagefixiert werden.

Gemäß einer weiteren Ausführungsform wird ein Verfahren vorgeschlagen, wobei das Aufbauen des Druckgradienten abwechselnd mit dem Auftragen des Materials erfolgt.

Vorteile eines somit diskontinuierlich aufgebauten Druckgradienten ergeben sich aus der Möglichkeit einer weitestgehend von Fluidströmungen unbeeinflussten Verfestigung. Beispielsweise kann eine zur Verfestigung verwendete lokale Temperaturerhöhung bei gleicher Leistung und Verweildauer des jeweiligen Werkzeugs länger aufrechterhalten werden, da kein vorzeitiges Abkühlen der verfestigten Struktur unter dem Einfluß vorbeiströmenden Fluids erfolgt.

Gemäß einer weiteren Ausführungsform wird ein Verfahren vorgeschlagen, wobei der Druckgradient kontinuierlich während der Schritte Auftragen, Formen und optionales Wiederholen aufrechterhalten wird.

Vorteile dieser Ausführungsform können sich für die Verwendung trockener Pulvermassen ergeben, da die trockene Pulvermasse während aller mit einer möglichen Schädigung einhergehenden Schritte gehalten und gestützt und die schichtweise ausgeprägten Strukturen geschützt werden.

Gemäß einer weiteren Ausführungsform wird ein Verfahren zur additiven Fertigung eines Bauteils durch schichtweises Verfestigen eines pulverförmigen Materials in einem Pulverbett vorgeschlagen, umfassend zumindest ein zeitweises Aufbauen eines Druckgradienten im Pulverbett und damit erreichtes Verdichten des Pulverbetts und Stabilisieren des schichtweise verfestigten Materials, sodass schichtweise verfestigtes Material während eines Auftragens von unverfestigtem pulverförmigen Material ohne die Verwendung zusätzlicher Supportstrukturen stabilisiert und fixiert wird.

Vorteile dieser Ausführungsform ergeben sich aus dem Verzicht auf die üblicherweise erforderlichen Supportstrukturen, deren Erzeugung zusätzlichen Material, Zeit- und Kostenaufwand erfordert.

Gemäß einer weiteren Ausführungsform wird die Verwendung einer vorstehend beschriebenen und nachfolgend näher erläuterten Vorrichtung zur pulverbasierten additiven Fertigung vorgeschlagen.

Vorteile der Verwendung der beschriebenen Vorrichtung ergeben sich für die Herstellung von Prototypen, von Gießformen und Modellen in Pulverbetten durch eine Material-, Zeit- und Kostenersparnis.

Die vorstehend beschriebenen Ausführungsformen können beliebig miteinander kombiniert werden.

Weitere Ausführungsformen, Modifikationen und Verbesserungen ergeben sich anhand der folgenden Beschreibung und der beigefügten Ansprüche.

Erfindungsgemäß wird das Pulverbett durch das Anlegen von Vakuum auf der Seite des vom Filter quasi geteilten Behälters, die vom Pulverbett abgewandt ist und eines Überdrucks im Behälter auf der Seite des Filters, die dem Pulverbett zugewandt ist derart stabilisiert, dass der Aufbau von Supportstrukturen entfallen kann.

In den letzten Jahren haben sich die Anforderungen an die Fertigungsindustrie, insbesondere im Bereich der Entwicklung und der Prototypenherstellung stark gewandelt. Die zunehmende Anzahl an Produktvarianten, bei einer größeren Komplexität, lässt den Bedarf an Prototypen ständig steigen. Unter den Leitbegriffen "Rapid Prototyping", "Rapid Manufacturing" oder "Additive Manufacturing" sind eine Vielzahl neuartiger Technologien entstanden, mit deren Hilfe sich der Anspruch an flexiblere Fertigungsverfahren realisieren lässt.

Die wesentlichen Merkmale dieser Verfahren sind die Erstellung von Prozesssteuerdaten aus CAD-Geometriedaten mit anschließender Steuerung von Bearbeitungseinrichtungen. Allen diesen Verfahren sind folgende Merkmale gemein.
1. Die Formgebung geschieht nicht durch Materialabtrag, sondern durch Zugabe von Material, oder durch den Phasenübergang eines Materials von flüssig nach fest bzw. es findet eine Kompaktierung eines pulverförmigen Ausgangsmaterials statt.
2. Alle Verfahren bauen Teilgeometrien aus Schichten endlicher Dicke, die durch einen Slice-Prozeß realisiert werden, direkt aus CAD-Daten auf.

Das Selective Laser Sintering (SLS) wurde ursprünglich für Pulver aus Nylon, Polycarbonat und Wachsen entwickelt und später auf Metallpulver übertragen. In einem Reaktor werden auf ein Pulverbett Pulverschichten lokal aufgesintert, wobei die Sintertemperatur durch Einsatz von Lasern erreicht wird.

Das Selective Laser Melting (SLM) ist eine Weiterentwicklung des Selective Laser Sintering (SLS) und wird für Pulver eingesetzt, die durch die Bildung einer Schmelzphase nahezu vollständig verdichtet werden können, wobei die Schmelztemperatur durch Einsatz von Lasern erreicht wird.

Das 3D Printing verwendet polymer, metallische oder keramische Pulver zum Auftragen von Schichten, die dann mittels lokalen einspritzen eines Binders verfestigt werden. Zum Einspritzen des Binders kommen Technologien vergleichbar einem Tintenstrahldrucker zum Einsatz.

Durch die geringe Festigkeit loser Pulverschüttungen, also der Pulver im Pulverbett eines pulverbasierten Prozesses zur additiven Fertigung, muss in der Regel eine Supportstruktur neben dem eigentlichen Bauteil aufgebaut werden. Aufgabe der Supportstruktur ist die Fixierung des Bauteils gegenüber der Bauplattform und somit im Koordinatensystem der Anlage. Der Aufbau dieser Supportstruktur ist zeitaufwendig. Insbesondere ist das spätere Entfernen der Supportstruktur vom eigentlichen Bauteil nach dem Abschluss des Aufbauprozesses nicht automatisierbar.

Im Falle des 3D Druckens führen herumfliegende Pulverpartikel des losen Pulverbetts zu einer Verunreinigung des Druckkopfes und zum Verkleben von Druckdüsen. Bei der Verwendung feinster keramischer Pulver, die z.B. zur Steigerung der Sinteraktivität oder zur Ausbildung eines besonders feinkristallinen Gefüges von keramischen Bauteilen eingesetzt werden, verstärken sich diese negativen Merkmale in aller Regel.

Die vorgeschlagene zumindest temporäre Stabilisierung eines Pulverbetts für die additive Fertigung durch Erzeugen eines Unterdrucks und damit erreichtes Verfestigen des Pulverbetts gestattet es die beschriebenen Nachteile zu überwinden.

Durch weitestgehend gleichmäßiges Ausüben eines Druckes auf das Pulverbett, können die einzelnen Partikel im Pulverbett fixiert und somit die gesamte Struktur des Pulverbetts gefestigt werden. Im Pulverbett befindliche Strukturen, die mit dem entsprechenden Fertigungsverfahren bereits aufgebaut wurden, werden hierdurch stabilisiert und im Koordinatensystem der Anlage fixiert. Somit entfällt der Bedarf an Supportstrukturen, was zu einer erheblichen Zeitersparnis führt, da diese nicht mehr aufgebaut werden und nach Beendigung des Aufbauprozesses nicht mehr vom Bauteil entfernt werden müssen.

Der zur Stabilisierung aufgebaute Druck wird gemäß dem vorgeschlagenen Verfahren durch die das Pulverbett umgebende äußere Atmosphäre generiert, indem am Fuße des Pulverbetts ein Unterdruck erzeugt wird.

Das Pulverbett einer Anlage für additive Fertigung wird üblicherweise durch einen oben offenen Behälter zusammengehalten. Bei vielen Anlagen ist der Boden dieser Behälter in der Höhe verstellbar und wird insbesondere vor der Generierung einer neuen Pulverschicht um die Schichtdicke abgesenkt, so dass das für die Addition einer neuen Schicht notwendige Volumen in den Behälter zur Verfügung steht. Erfindungsgemäß ist nun der Boden derart als Filter ausgelegt, dass er luftdurchlässig ist, dabei jedoch das Pulver nicht in den Filter eindringen oder durch den Filter hindurch gelangen kann.

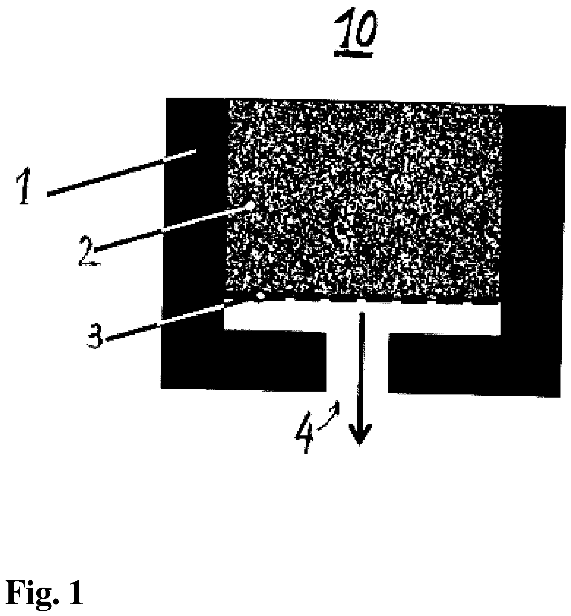

Gemäß der beigefügten Fig. 1 kann nun auf der einen Seite des Filters ein Unterdruck erzeugt werden, indem beispielsweise eine Saugpumpe oder eine Vakuumpumpe so an den Behälter angeschlossen wird, dass sich der erzeugte Unterdruck über den Filter auf das poröse Pulverbett überträgt.

Über den hierdurch erzeugten kontinuierlichen Gasstrom im Pulverbett von der Oberfläche des Pulverbetts zum Filter hin und den sich hiermit aufbauenden Druckgradienten werden die einzelnen Partikel im Pulverbett fixiert.

Vorteilhafterweise beträgt die erzeugte Druckdifferenz 1 Atmosphäre.

Gemäß der beanspruchten Vorrichtung und des darauf basierenden Verfahrens wird zusätzlich zum einseitig auf der vom Pulverbett abgewandten Seite der porösen Plattform angelegten Unterdruck (Vakuum), auf der dem Pulverbett zugewandten Seite, also auf der Seite der freien Oberfläche des Pulverbettes, ein Überdruck erzeugt und zur Ausbildung, insbesondere zur Verstärkung des Druckgefälles im Pulverbett genutzt.

Ein Vorteil der entsprechend angepassten Vorrichtung bzw. des darauf basierenden Verfahrens ergibt daraus, dass nun auch Druckdifferenzen über 1 bar im Pulverbett aufgebaut werden können. Die jeweils auf die Partikel wirkenden Kräfte sind dementsprechend größer und der Stützeffekt auch für Schichten kleinerer Partikeln, welche die Ausbildung wesentlich feinerer Strukturen erlauben, jedoch eine verminderte Porosität des Pulverbetts bedingen, ausreichend.

Ein wesentlicher Vorteil des vorgeschlagenen Verfahrens bzw. der zu seiner Umsetzung vorgeschlagenen Vorrichtung besteht in der Möglichkeit, auf die zeitaufwendige und kostenintensive Verwendung von Supportstrukturen vollständig verzichten zu können. Sowohl der Aufbau und die Entfernung von Supportstrukturen in pulverbasierten additiven Fertigungsprozessen sind zeit- und kostenintensiv, da sie keine Bestandteile des eigentlichen Bauteils sind. Speziell das Entfernen der Supportstruktur vom eigentlichen Bauteil ist kaum automatisierbar. Das Entfallen des Aufbaus von Supportstrukturen ist daher von hohem wirtschaftlichem Interesse.

Unserer Kenntnis nach wird zur Stabilisierung des Pulverbetts in additiven Fertigungsprozessen bisher kein Vakuum eingesetzt. Da die mittels Unterdruck bewirkte Stabilisierung schaltbar, also zeitlich vorübergehend erreichbar ist, kann die Erfindung auf viele pulverbasierte additive Fertigungsprozesse direkt übertragen werden, ohne das z.B. der Entformungsprozess das Bauteils aus dem Pulver beeinflusst wird. Dies begründet die hohe wirtschaftliche Bedeutung der vorgeschlagenen Vorrichtung und ihrer Verwendung.

Die beiliegende Figur veranschaulicht eine beispielhafte Ausführungsform und dient zusammen mit der Beschreibung der Erläuterung der Prinzipien des vorgeschlagenen Verfahrens.

Insbesondere zeigt Fig. 1 ein Pulverbett (2) welches in der dargestellten Ausführungsform von vier Seiten durch geschlossene Wände (1) begrenzt wird. Ein zu den Wänden beweglicher Filter (3) schließt das Pulverbett nach unten ab und erlaubt das Anlegen eines Vakuums über ein Absaugen der Atmosphäre an einem entsprechenden Anschluss (4) bzw. einem Saugstutzen (4). Nach oben ist das Pulverbett zugänglich zum Auftragen von weiteren Pulverschichten definierter Dicke und zur lokalen Verfestigung mittels Aufbringung eines Binders, Lasersintern und weiteren dem jeweiligen pulverbasierten additiven Fertigungsverfahren entsprechenden Verfestigungskonzepten. Das Anlegen eines Vakuums durch den Filter führt zu einer Stabilisierung des Pulverbetts.

Der erfindungsgemäß ermöglichte völlige Verzicht auf Supportstrukturen hat einen weiteren entscheidenden Vorteil. Supportstrukturen fixieren das Bauteil auf der Bauplattform in jedem Stadium seines Aufbaus. Spannungen im Bauteil, die durch das Aufbringen und Trocknen von Binder im 3D-Druckprozess oder durch thermische Gradienten beim lokalen Lasersintern in jeder Schicht auftreten, können jedoch nicht durch eine kleine, im Rahmen des Schichtaufbaus tolerierbare, Relaxationsbewegung des entsprechenden verfestigten Schichtbereichs kompensiert werden. Derartige Spannungen werden mit der Supportstruktur somit zumindest teilweise fixiert und führen nach dem Entfernen der Supportstruktur u.U. zu einer irreversiblen und kaum vorhersehbaren Verformung und Schädigung des Bauteils.

Im Gegensatz dazu können kleine, durch lokal auftretende Spannungen verursachte, Relaxationsbewegungen in einer erfindungsgemäß von Supportstrukturen freien Schicht während des Aufbaus der nachfolgenden Schicht kompensiert werden. Das Bauteil wird also von vornherein spannungsfrei aufgebaut. Dementsprechend sind auch keine Spannungen im Bauteil bei dessen Entnahme vorhanden, die das Bauteil verformen oder schädigen könnten.

Gemäß praktischen Ausführungsbeispielen wurde aus einem keramischen Knochenersatzmaterial mittels 3D-Druck unter Nutzung der hier beschriebenen Vorrichtung bzw. des darauf basierenden Verfahrens Modellkörper hergestellt. Derartige Bauteile, die bisher nur mittels Unterstützung durch eine Supportstruktur erhalten werden konnten, wurden nun ohne Supportstruktur frei um Pulverbett generiert.

Grundsätzlich ist das beschriebene Verfahren für alle drei Werkstoffklassen, für polymere, keramische und metallische Werkstoffe, geeignet. Ein weiterer Vorteil des Verfahrens ist die Tatsache, dass für das Auftragen von Schichten immer eine gute Rieselfähigkeit der Pulver gefordert ist. Dies bedeutet, dass eine gewisse minimale Partikelgröße der Pulver nicht unterschritten werden darf. Bei Pulvern mit zu feinen Partikeln sind die adhäsiven Kräfte zwischen den Partikeln vergleichbar groß wie die Kräfte die durch die Gravitation auf die Partikel wirken, was einem gleichmäßigen Rieseln und somit einem gleichmäßigen Schichtaufbau entgegenwirkt. Die Verwendung von feineren Pulvern hat jedoch viele Vorteile, wie z.B. die Möglichkeit dünnere Schichten aufzubauen, was eine höhere Baugenauigkeit bedeutet, oder eine bessere anschließende Verdichtung von Bauteilen durch Sintern, da kleinere Partikel sinterfähiger sind. Die mittels Unterdruck (Druckdifferenz) im porösen Pulverbett aufgebaute Gasströmung (ggf. Luftströmung) erlaubt nun die Verwendung von feineren Pulvern, da jedes einzelne Partikel neben der Gravitationskraft eine zusätzliche Kraft durch die Luftströmung in Richtung der Oberfläche des Pulverbettes erfährt. Vorteilhafterweise erleichtert das einen gleichmäßigen Schichtaufbau, auch mit nicht optimal rieselfähigen Pulvern.

### Referenzen

[1] Jensen, K.: State-of-the Art of Different Available and Coming RP-Systems. Proceedings of "2nd Scandinavian Rapid Prototyping Conference, Exhibition and Course", Aarhus, 1993.
[2] Sheng, X., Tucholke, U.: On Triangulating Surface Models for SLA. Proceedings of the 2nd International Conference on Rapid Prototyping, Dayton, Ohio, 23.-26.6.1991.
[3] Lakshminarayan, U., Zong, G., Richards, W., Marcus, H.: Solid Free Form Fabrication of Ceramics. Proceedings of the Symposium on Synthesis and Processing of Ceramics, Fall Meeting of the Material Research Society, Boston, Mass., Dez. 2-6, 1991.
[4] Reinhold Melcher, Dissertation Erlangen 2009

### Bezugszeichenliste

- 1: Behälter;
- 2: Pulver, Pulverbett;
- 3: Filter, Siebstruktur;
- 4: Anschluss für eine Saugpumpe; Saugstutzen
- 10: Vorrichtung zur Stabilisierung eines Pulverbetts für die additive Fertigung.

## Patentansprüche

1. Vorrichtung (10) zur Stabilisierung eines Pulverbetts (2) durch Unterdruck für ein additives Fertigungsverfahren, umfassend:
- einen zumindest einseitig offenen Behälter (1), umfassend einen Boden, eine Behälteröffnung und zwei parallel zueinander angeordnete Seitenwände und einen Filter (3) im oder über dem Boden und/oder in der zumindest einen Seitenwand, wobei der Filter (3) jeweils bündig zu den Seitenwänden und im Wesentlichen rechtwinklig zu einander gegenüberliegenden Flächen der Seitenwände ausgerichtet ist und unter Beibehaltung seiner Ausrichtung zwischen den Seitenwänden frei bewegt werden kann;
- wobei eine vom Filter (3) eingenommene Fläche der Fläche des Bodens oder der Seitenwand entspricht und wobei der Filter (3) im Wesentlichen undurchlässig für ein das Pulverbett (2) umfassendes Pulver ist;
- eine an einen Anschluss (4) am Boden und/oder an der Seitenwand des Behälters (1) oder auf einer von der Behälteröffung abgewandten Seite des Filters (3) angeschlossene Saugpumpe zum Evakuieren des Pulverbetts (2); und
- eine an die Behälteröffnung anschließbare oder mit dieser verbindbare Kompressionsvorrichtung, die über ein mit Druck beaufschlagtes Gas Druck auf das Pulverbett (2) auszuüben vermag,
sodass ein im Behälter (1) angeordnetes Pulverbett (2) durch einen von der Saugpumpe erzeugten Unterdruck und das mit Druck beaufschlagte Gas gegen den Filter (3) gedrückt und stabilisiert wird.

2. Vorrichtung (10) nach Anspruch 1, wobei die Kompressionsvorrichtung ausgewählt ist unter einer Pumpe, einem Kompressor und/oder einer Druckgasflasche.

3. Vorrichtung (10) gemäß einem der vorstehenden Ansprüche, wobei der Filter (3) als Transportband ausgeführt ist, das quer zu den einander gegenüberliegenden Seitenwänden beweglich angeordnet ist, welches optional rechtwinklig zu einer Transportrichtung verstellbar ist, und/oder schrittweise entlang einer Transportrichtung beweglich ist.

4. Vorrichtung (10) gemäß Anspruch 1 bis 3, wobei der Filter (3) in dem Behälter (1) relativ zu einer Behälteröffnung, insbesondere von der Behälteröffnung weg oder zur Behälteröffnung hin, bewegt werden kann und/oder der Filter (3) in Schritten definierter Größe schrittweise abgesenkt werden kann, wobei die Behälteröffnung eine obere Öffnung des Behälters (1) ist.

5. Vorrichtung (10) gemäß Anspruch 4, wobei der Filter (3) so abgesenkt werden kann, dass sich ein Abstand des Filters (3) zu einer Ebene, die im Wesentlichen durch einen Öffnungsquerschnitt der Behälteröffnung definiert wird, über die gesamte vom Filter (3) eingenommene Fläche gleichmäßig ändert.

6. Vorrichtung (10) gemäß einem der vorstehenden Ansprüche, wobei ein gleichmäßiges Evakuieren des Pulverbetts (2) über die gesamte vom Filter eingenommene Fläche durch den Filter (3) gewährleistet wird durch:
- eine Anordnung von Kanälen oder Ausnehmungen im Boden des Behälters (1), wenn der Filter (3) vollständig auf den Boden des Behälters abgesenkt ist, oder
- eine Trichterform des Filters (3) und/oder des Bodens.

7. Vorrichtung (10) nach einem der vorstehenden Ansprüche, wobei das Pulverbett (2) ein zumindest teilweise schichtweise aufgebautes Bauteil oder einen Teil eines solchen Bauteils zumindest abschnittsweise umschließt und/oder während des Betriebs der an den Anschluss (4) angeschlossenen Saugpumpe stabilisiert und stützt.

8. Verfahren zur schichtweisen Ausformung eines Bauteils aus einem Material, umfassend ein als Pulverbett (2) bereitgestelltes Pulver, umfassend:
- Auftragen zumindest einer Schicht des Materials auf einen Filter (3);
- Formen einer Schicht eines schichtweise aufgebauten Bauteils in der zumindest einen Schicht des Materials;
- Aufbauen eines Druckgradienten zwischen der zumindest einen Schicht des Materials und einer vom Material abgewandten Seite des Filters (3) durch Erzeugen eines Unterdrucks, wobei die unter der Wirkung des Druckgradienten verdichtete zumindest eine Schicht die geformte Schicht des schichtweise aufgebauten Bauteils stabilisiert und stützt und
Verstärken des aufgebauten Druckgradienten durch Erzeugen eines Überdrucks auf einer Seite einer freien Oberfläche des Pulverbetts (2) und/oder einer dem Material zugewandten Seite des Filters (3) durch Zuführen eines Inertgases und/oder eines Reaktivgases;
- Wiederholen der Schritte Auftragen, Formen und Aufbauen und Verstärken des Druckgradienten bis zur vollständigen Ausformung des Bauteils in einem Pulverbett (2), das durch wiederholtes schichtweises Auftragen des Materials auf dem Filter ausgebildet wird;
- Entformen des Bauteils.

9. Verfahren nach Anspruch 8, weiterhin umfassend:
- Sammeln und/oder Komprimieren des zugeführten Gases auf der vom Material abgewandten Seite des Filters (3) und
- erneutes Zuführen des gesammelten und/oder komprimierten Gases auf der Seite der freien Oberfläche des Pulverbetts (2) und/oder auf der dem Material zugewandten Seite des Filters (3).

10. Verfahren nach einem der Ansprüche 8 oder 9, wobei eine Atmosphäre auf der dem Material zugewandten Seite einen Druck > 0 Pa aufweist.

11. Verfahren nach einem der vorstehenden Ansprüche, wobei das Aufbauen des Druckgradienten abwechselnd mit dem Auftragen des Materials erfolgt oder der Druckgradient kontinuierlich während der Schritte Auftragen, Formen und optionales Wiederholen aufrechterhalten wird.

12. Verwendung einer Vorrichtung (10) gemäß einem der Ansprüche 1 bis 7 zur pulverbasierten additiven Fertigung.

## Claims

1. A device (10) for negative pressure stabilization of a powder bed (2) for an additive manufacturing process, comprising:
- a container (1) that is open on at least one side, this container (1) in turn comprising a bottom, a container opening, and two side walls arranged parallel to one another, a filter (3) in or above the bottom and/or in the at least one side wall, wherein the filter (3) is oriented flush with each of the side walls and essentially at right angles to side wall surfaces that are opposite one another and can freely be moved between the side walls while maintaining its orientation;
- wherein a surface occupied by the filter (3) corresponding to the surface of the bottom or the side wall and the filter (3) is essentially impervious to a powder comprising a powder bed (2);
- a suction pump for evacuating the powder bed which is connected to a connection (4) on the bottom and/or on the side wall of the container (1) or on a side of the filter (3), this side facing away from the container opening; and
- a compression device that is attachable to or connectable with the container opening, this compression device being able to exert pressure on the powder bed (2) through a pressurized gas,
so that a powder bed (2) arranged in the container (1) is pressed against the filter (3) and stabilized through a negative pressure produced by the suction pump and the pressurized gas.

2. A device (10) according to claim 1, wherein the compression device is selected from among a pump, a compressor, and/or a compressed gas cylinder.

3. A device (10) according to one of the above claims, wherein the filter (3) is in the form of a conveyor belt that is movably arranged transverse to the side walls that are opposite one another, this conveyor belt optionally being adjustable at right angles to a transport direction, and/or being movable stepwise in a transport direction.

4. A device (10) according to any one of claims 1 through 3, wherein the filter (3) can be moved in the container (1) relative to a container opening, especially away from the container opening or toward the container opening, and/or the filter (3) can be lowered in steps of defined size, the container opening being a top opening of the container (1).

5. A device (10) according to claim 4, wherein the filter (3) can be lowered so that a distance of the filter (3) to a plane that is essentially defined by an opening cross section of the container opening, changes uniformly over the entire surface occupied by the filter (3).

6. A device (10) according to any one of the preceding claims, wherein a uniform evacuation of the powder bed (2) through the filter (3) is ensured over the entire surface occupied by the filter by:
- an arrangement of channels or recesses in the bottom of the container (1), if the filter (3) is lowered completely to the bottom of the container, or
- a funnel shape of the filter (3) and/or of the bottom.

7. A device (10) according to any one of the preceding claims, wherein the powder bed (2) surrounds at least partially a component or a part of such a component, that is at least partially built layer-by-layer, and/or stabilizes and supports said component or part of such component during the operation of the suction pump attached to the connection (4).

8. A process for forming a component layer-by-layer from a material comprising a powder provided in the form of a powder bed (2), comprising:
- applying at least one layer of the material onto a filter (3);
- forming a layer of a component built layer-by-layer in the at least one layer of the material;
- building up a pressure gradient between the at least one layer of the material and a side of the filter (3), this side facing away from the material, by producing a negative pressure, wherein the at least one layer is compacted under the effect of the pressure gradient stabilizing and supporting the formed layer of the component that is built layer-by-layer; and
increasing the built-up pressure gradient by producing an excess pressure on one side of a free surface of the powder bed (2) and/or on a side of the filter (3), this side facing toward the material, by supplying an inert gas and/or a reactive gas;
- repeating the steps of applying, forming, and building up and increasing the pressure gradient until the component is completely formed in a powder bed (2) by repeated layer-by-layer application of the material onto the filter;
- removing the component.

9. A process according to claim 8, further comprising:
- collecting and/or compressing the supplied gas on that side of the filter (3) that faces away from the material; and
- resupplying the collected and/or compressed gas to the side of the free surface of the powder bed (2) and/or to that side of the filter (3) that faces toward the material.

10. A process according to one of the claims 8 or 9, wherein an atmosphere on the side facing toward the material has a pressure > 0 Pa.

11. A process according to any one of the preceding claims, wherein the pressure gradient is built up in alternation with the application of the material, or the pressure gradient is continuously maintained during the steps of applying, forming, and optionally repeating.

12. The use of a device (10) according to any one of the claims 1 through 7 for powder-based additive manufacturing.

## Revendications

1. Dispositif (10) pour la stabilisation d'un lit de poudre (2) par une pression négative pour un procédé de fabrication additif, comprenant :
- un récipient (1) ouvert au moins d'un côté, comprenant un fond, une ouverture de récipient et deux parois latérales disposées parallèlement l'une à l'autre, un filtre (3) dans ou au-dessus du fond et/ou dans la au moins une paroi latérale, où le filtre (3) est orienté de manière contiguë par rapport aux parois latérales et sensiblement perpendiculairement à des surfaces opposées l'une à l'autre des parois latérales et peut être déplacé librement avec maintien de son orientation entre les parois latérales ;
- où une surface occupée par le filtre (3) correspond à la surface du fond ou de la paroi latérale et où le filtre (3) est sensiblement imperméable pour une poudre comprenant le lit de poudre (2) ;
- une pompe d'aspiration branchée à un branchement (4) au fond et/ou sur la paroi latérale du récipient (1) ou sur un côté du filtre (3) opposé à l'ouverture de récipient pour la mise sous vide du lit de poudre,
- un dispositif de compression qui peut être branché à l'ouverture de récipient ou relié à celle-ci, qui permet d'exercer une pression sur le lit de poudre (2) par le biais d'un gaz soumis à une pression,
de sorte qu'un lit de poudre (2) disposé dans le récipient (1) est pressé contre le filtre (3) et stabilisé par une pression négative générée par la pompe d'aspiration et le gaz soumis à une pression.

2. Dispositif (10) selon la revendication 1, où le dispositif de compression est choisi parmi une pompe, un compresseur et/ou une bouteille de gaz comprimé.

3. Dispositif (10) selon l'une des revendications précédentes, où le filtre (3) est réalisé sous forme de bande transporteuse, qui est disposée de manière mobile transversalement aux parois latérales opposées l'une à l'autre, qui est éventuellement déplaçable perpendiculairement à une direction de transport, et/ou qui est mobile par pas le long d'une direction de transport.

4. Dispositif (10) selon les revendications 1 à 3, où le filtre (3) peut être déplacé dans le récipient (1) par rapport à une ouverture de récipient, en particulier en s'éloignant de l'ouverture de récipient ou en se rapprochant de l'ouverture de récipient, et/ou le filtre (3) peut être abaissé par pas par des pas de taille définie, où l'ouverture de récipient est une ouverture supérieure du récipient (1).

5. Dispositif (10) selon la revendication 4, où le filtre (3) peut être abaissé de telle sorte qu'une distance du filtre (3) à un plan, qui est défini sensiblement par une section droite d'ouverture de l'ouverture de récipient, varie uniformément sur toute la surface occupée par le filtre (3).

6. Dispositif (10) selon l'une des revendications précédentes, où une mise sous vide uniforme du lit de poudre (2) à travers le filtre (3) sur toute la surface occupée par le filtre (3) est garantie par :
- un agencement de canaux ou d'évidements dans le fond du récipient (1), quand le filtre (3) est abaissé totalement sur le fond du récipient, ou
- une forme d'entonnoir du filtre (3) et/ou du fond.

7. Dispositif (10) selon l'une des revendications précédentes, où le lit de poudre (2) entoure au moins par sections un élément constitutif formé au moins en partie par couches ou une partie d'un tel élément constitutif et/ou le stabilise et le soutient pendant le fonctionnement de la pompe d'aspiration branchée au branchement (4).

8. Procédé pour la formation par couches d'un élément constitutif en un matériau, comprenant une poudre disposée sous forme de lit de poudre (2), comprenant :
- l'application d'au moins une couche du matériau sur un filtre (3) ;
- la formation d'une couche d'un élément constitutif constitué par couches dans la au moins une couche du matériau ;
- l'établissement d'un gradient de pression entre la au moins une couche du matériau et un côté du filtre (3) opposé au matériau par la production d'une pression négative, où la au moins une couche compactée sous l'effet du gradient de pression stabilise et soutient la couche formée de l'élément constitutif constitué par couches et
le renforcement du gradient de pression établi par la production d'une pression positive sur un côté d'une surface libre du lit de poudre (2) et/ou un côté du filtre (3) tourné vers le matériau par apport d'un gaz inerte et/ou d'un gaz réactif ;
- la répétition des étapes application, formation et établissement et renforcement du gradient de pression jusqu'à la formation complète de l'élément constitutif dans un lit de poudre (2), qui est formé par l'application par couches répété du matériau sur le filtre ;
- le démoulage de l'élément constitutif.

9. Procédé selon la revendication 8, comprenant en outre :
- la collecte et/ou la compression du gaz apporté sur le côté du filtre (3) opposé au matériau et
- l'apport renouvelé du gaz collecté et/ou comprimé sur le côté de la surface libre du lit de poudre (2) et/ou sur le côté du filtre (3) tourné vers le matériau.

10. Procédé selon l'une des revendications 8 ou 9, où une atmosphère sur le côté tourné vers le matériau présente une pression > 0 Pa.

11. Procédé selon l'une des revendications précédentes, où l'établissement du gradient de pression a lieu en alternance avec l'application du matériau ou le gradient de pression est maintenu de manière continue pendant les étapes application, formation et éventuellement répétition.

12. Utilisation d'un dispositif (10) selon l'une des revendications 1 à 7 pour la fabrication additive à base de poudre.
